(19) Europäisches Patentamt / European Patent Office / Office européen des brevets

(11) **EP 4 542 253 A1**

(12) **EUROPEAN PATENT APPLICATION**

(43) Date of publication:
23.04.2025 Bulletin 2025/17

(21) Application number: 24203618.4

(22) Date of filing: 30.09.2024

(51) International Patent Classification (IPC):
*G01S 7/481* (2006.01)   *G01S 7/4865* (2020.01)
*G01S 7/487* (2006.01)   *G01S 17/14* (2020.01)
*G01S 17/931* (2020.01)

(52) Cooperative Patent Classification (CPC):
G01S 17/14; G01S 7/4816; G01S 7/4865;
G01S 7/487; G01S 17/931

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.10.2023  CN 202311337887

(71) Applicant: Suteng Innovation Technology Co., Ltd
Shenzhen City Guangdong 518000 (CN)

(72) Inventor: GONG, Changsheng
Shenzhen (CN)

(74) Representative: Ran, Handong et al
Maucher Jenkins
Seventh Floor Offices
Artillery House
11-19 Artillery Row
London SW1P 1RT (GB)

(54) **LIDAR DATA PROCESSING DEVICE WITH TDC INPUT SELECTION MODULE AND LIDAR SYSTEM**

(57)    A LiDAR data processing device and method, and a LiDAR system are disclosed, including: an input selection module used for selecting an input channel; a time digital conversion module connected to the input selection module, and used to respectively time an echo signal or a start signal to obtain a timing result; an extraction module connected to the input selection module and the time digital conversion module respectively, and used to extract phase of the start signal to obtain a phase result; a phase decomposition module connected to the extraction module, and used to calculate a measurement result; wherein a receiving unit and an emitting unit adopt a homologous clock design. It can effectively improve the accuracy of the measurement result of the LiDAR system, and improve the measurement accuracy of the LiDAR system.

Fig. 5

EP 4 542 253 A1

**Description**

TECHNICAL FIELD

The present application relates to the technical field of LiDAR systems, and in particular, to a LiDAR data processing device and a LiDAR system.

BACKGROUND

LiDAR systems are often used in autonomous driving, logistics vehicles, robots, public smart transportation and other fields due to their high resolution, high sensitivity, strong anti-interference ability, and not being affected by dark conditions.

For LiDAR systems that use independent chips for emission and reception, the emitting unit often has its corresponding working clock, and the receiving unit has its corresponding working clock. Since there is a certain delay in the emission process of the emitting unit, there will also be a certain delay in the receiving unit during the receiving process.

SUMMARY

Embodiments of the present application provide a LiDAR data processing device and a LiDAR system, which can improve the measurement accuracy of the LiDAR system.

In a first aspect, an embodiment of the present application provides a LiDAR data processing device, which is applicable to a receiving unit of a LiDAR system, including:

an input selection module, used to select an input channel, wherein the input channel includes an echo signal input channel and a start signal input channel; the echo signal input channel is used to receive an echo signal, and the start signal input channel is used to input a start signal for initiating an emission signal, and the start signal is sent by an emitting unit;

a time digital conversion module, connected to the input selection module, and used for timing the echo signal or the start signal to obtain a timing result;

an extraction module, connected to the input selection module and the time digital conversion module respectively, and used for performing phase extraction on the start signal to obtain a phase result; and

a phase decomposition module, connected to the extraction module, and configured to calculate a measurement result based on the timing result and the phase result,

wherein the receiving unit and the transmitting unit adopt a homologous clock design.

In an embodiment, the input selection module includes:

a multiplexing switch unit, connected to the echo signal input channel and the start signal input channel respectively, and used to select a first signal path or a second signal path; wherein the first signal path is a connection path between the echo signal input channel and the time digital conversion module, and the second signal path is a connection path between the start signal input channel and the time digital conversion module;

a switch switching unit, connected to the multiplexing switch unit and is used to output a switching signal to the multiplexing switch unit when the receiving unit receives the echo signal, so that the multiplexing switch unit selects the second signal path.

In an embodiment, the switch switching unit is further connected to the extraction module and the phase decomposition module respectively; the switch switching unit is further used to output a valid signal flag to the extraction module and the phase decomposition module.

In an embodiment, the valid signal flag is used to indicate that a signal being processed by the time digital conversion module is the echo signal; the phase decomposition module is used to perform dephasing processing according to the timing result and the phase result when the valid signal flag is received.

In an embodiment, the LiDAR data processing device further includes: an initial reset module, connected to the time digital conversion module, and configured to output a zeroing control instruction to the time digital conversion module when receiving a start signal, so as to reset the zero time of the time digital conversion module.

In an embodiment, the LiDAR data processing device further includes: a cache module, connected to the extraction module, and used for caching phase result extracted by the extraction module; and a filter module, connected to the cache module, and is used to filter the phase result cached in the cache module.

In an embodiment, the receiving unit includes a plurality of receiving channels, and the LiDAR data processing device further includes:

a multi-channel switch unit, connected to the plurality of receiving channels respectively, and used for selecting a connection path of the corresponding receiving channel according to a channel selection signal; and
a channel selection unit is connected to the multi-channel switch unit and is used to output a channel selection signal.

In an embodiment, the receiving unit includes a plurality of receiving channels, each receiving channel is provided with a multiplexing switch unit, a time digital conversion module, an extraction module, and a phase decomposition module;

the multiple receiving channels are all connected to the switch switching unit;
the switch switching unit is used to access the start signal and control a gating state of the multiplexing switch units in the multiple receiving channels.

In a second aspect, an embodiment of the present application provides a LiDAR system, including an emitting unit and a receiving unit; the emitting unit and the receiving unit adopt a clock homology design; the receiving unit comprises the LiDAR data processing device.
In an embodiment, the emitting unit and the receiving unit are respectively connected to the same external clock generating circuit;

the external clock generating circuit includes a clock generator and a power division circuit;
the clock generator is used to generate and output an original clock signal;
the power division circuit is used to split the original clock signal to obtain a first clock signal and a second clock signal, and output the first clock signal to the emitting unit and output the second clock signal to the receiving unit.

In an embodiment, the emitting unit is connected to an external clock generator; the external clock generator is used to generate and output an original clock signal to the emitting unit;
the emitting unit is used to perform frequency division processing or frequency multiplication processing on the original clock signal, and output the processed clock signal to the receiving unit.
In an embodiment, the receiving unit is connected to an external clock generator;

the external clock generator is used to generate and output an original clock signal to the receiving unit;
the receiving unit is used to perform frequency division processing or frequency multiplication processing on the original clock signal, and output the processed clock signal to the emitting unit.

Embodiments of the present application provides a LiDAR data processing device and a LiDAR system, wherein the emitting unit and the receiving unit of the LiDAR system adopt a homologous clock design, and the LiDAR data processing device is arranged on the receiving unit side. The LiDAR data processing device can perform timing according to the start signal and the echo signal respectively to obtain a time measurement result, and then perform phase resolution processing according to the extracted phase result of the start signal and the time measurement result, so as to obtain a measurement result with time delay eliminated, thereby effectively improving the accuracy of the measurement result of the LiDAR system and improving the measurement accuracy of the LiDAR system.

BRIEF DESCRIPTION OF DRAWINGS

In order to more clearly illustrate the technical solutions in the embodiments of the present application, the drawings required for use in the embodiments will be briefly introduced below. Obviously, the drawings described below are only some embodiments of the present application.

Fig. 1 is a schematic diagram of a homologous clock design architecture of an emitting unit and a receiving unit of a LiDAR system provided in an embodiment;
Fig. 2 is a schematic diagram of a homologous clock design architecture of an emitting unit and a receiving unit of another LiDAR system provided in an embodiment;
Fig. 3 is a schematic diagram of a homologous clock design architecture of an emitting unit and a receiving unit of another LiDAR system provided in an embodiment;
Fig. 4 is a schematic diagram of the structure of a LiDAR data processing device provided in an embodiment;
Fig. 5 is a schematic diagram of the structure of another LiDAR data processing device provided in an embodiment;
Fig. 6 is a phase timing diagram obtained by a receiving unit provided in an embodiment;

Fig. 7 is a phase timing diagram of a start signal and a detection signal provided in an embodiment;

Fig. 8 is a schematic diagram of the structure of a LiDAR data processing device provided in an embodiment;

Fig. 9 is a schematic diagram of sending and receiving signals between an emitting unit and a receiving unit in a LiDAR system provided in an embodiment;

Fig. 10 is a schematic diagram of the structure of another LiDAR data processing device provided in an embodiment;

Fig. 11 is a schematic diagram of the structure of a LiDAR data processing device with multiple receiving channels provided in an embodiment;

Fig. 12 is a schematic diagram of the structure of a LiDAR data processing device with multiple receiving channels provided in an embodiment.

DETAILED DESCRIPTION

In the following description, details such as system structures, technologies, etc. are provided for the purpose of illustration, so as to provide a thorough understanding of the embodiments of the present application. In other cases, detailed descriptions of well-known systems, devices, circuits, and methods are omitted to prevent unnecessary details from obstructing the description of the present application.

The term "and/or" used in the specification of this application and the appended claims refers to any combination of one or more of the associated listed items and all possible combinations, and includes these combinations. In addition, in the description of the specification of this application and the appended claims, the terms "first", "second", "third", etc. are only used to distinguish the description and cannot be understood as indicating or implying relative importance.

References to "one embodiment" or "some embodiments" etc. described in the specification of the present application mean that one or more embodiments of the present application include features, structures or characteristics described in conjunction with the embodiment. Thus, the statements "in one embodiment", "in some embodiments", "in some other embodiments", "in some other embodiments", etc. that appear in different places in the specification do not necessarily refer to the same embodiment, but mean "one or more but not all embodiments", unless otherwise specifically emphasized in other ways. The terms "including", "comprising", "having" and their variations all mean "including but not limited to", unless otherwise specifically emphasized in other ways.

A LiDAR system has an emitting unit and a receiving unit. The emitting unit can emit a detection signal. When the detection signal reaches the target object, the echo signal reflected by the target object can be received by the receiving unit. The LiDAR system can then obtain the corresponding measurement result based on the received echo signal.

For LiDAR systems where the emitting unit and receiving unit are integrated on the same processing chip, since the emitting unit and the receiving unit use the same clock signal, there will be no problem of inconsistent measurement time. However, due to the continuous development of LiDAR systems and the increasing complexity of the processing of emission and reception, many LiDAR systems with independent chips for emission and reception have appeared, that is, the emitting unit uses an independent processing chip, and the receiving unit uses an independent processing chip. However, since the clock signals of different processing chips are different, that is, the emitting unit has its own clock signal, the receiving unit also has its own clock signal, and the emitting unit will have an independent delay when emitting the detection signal driven by its clock signal, and the receiving unit will also have an independent delay when receiving the echo signal driven by its clock signal.

In order to ensure that the received echo signal can be accurately analyzed, it is necessary to make the processing chip of the emitting unit and the processing chip of the receiving unit achieve consistent measurement time. However, since the working clocks of the transceiver units are independent and the delay is inconsistent, the accuracy of the measurement results will be seriously affected, resulting in low measurement accuracy.

An embodiment of the present application provides a LiDAR data processing device and a LiDAR system, wherein the emitting unit and the receiving unit of the LiDAR system adopt a homologous clock design, and the LiDAR data processing device is arranged on the receiving unit side. The LiDAR data processing device can perform timing according to a start signal for initiating an emission signal and the echo signal respectively, to obtain the time measurement result, and then perform phase decomposition processing according to the extracted phase result of the start signal and the time measurement result, so as to obtain the measurement result with the time delay eliminated, thereby effectively improving the accuracy of the measurement result of the LiDAR system and improving the measurement accuracy of the LiDAR system.

Emitting unit and receiving unit of the LiDAR system provided in an embodiment adopt a clock homology design, that is, the clock signals used by the emitting unit and the receiving unit are output by the same clock chip.

In an embodiment, the emitting unit and the receiving unit in the LiDAR system use independent processing chips, and the homologous clock design of the above emitting unit and the receiving unit may include the following methods:

1. Use same external clock generator to output a clock signal, which is processed by a power division circuit, and then output to the emitting unit and the receiving unit.

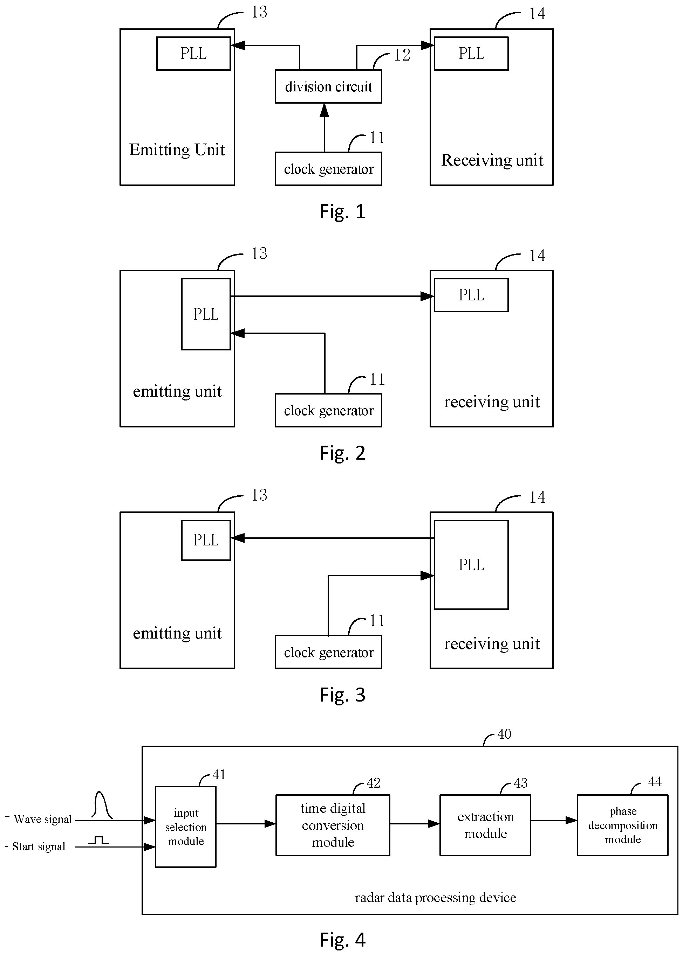

Exemplarily, as shown in Fig. 1, the clock generator 11 generates an original clock signal, and outputs the original clock signal to the power division circuit 12 for processing, and then the power division circuit outputs a first clock signal to the emitting unit 13 (it can be a phase-locked loop unit (PLL) of the processing chip of the emitting unit 13), and outputs a second clock signal to the receiving unit 14 (it can be a phase-locked loop unit of the receiving unit 14).

The function of the power division circuit in an embodiment is to divide an energy of one input signal into two or more output circuits with equal or unequal energy. In an embodiment, the existing power division circuit is used to realize the branching processing of the original clock signal, thereby obtaining the above-mentioned first clock signal and the above-mentioned second clock signal.

2. Use a clock generator to provide a clock signal for the emitting unit. The clock signal is then divided/multiplied by the emitting unit and output to the receiving unit to provide a clock signal for the receiving unit.

Exemplarily, as shown in Fig. 2, the clock generator 11 generates an original clock signal and outputs the original clock signal to the emitting unit 13, providing the emitting unit 13 with a clock signal. The original clock signal is subjected to frequency division/multiplication processing by the emitting unit 13 and then output to the receiving unit 14.

The frequency division/multiplication processing of the original clock signal by the emitting unit 13 can be implemented by using existing frequency division circuits and frequency multiplication circuits.

3. Use a clock generator to provide a clock signal for the receiving unit. The clock signal is then divided/multiplied by the receiving unit and output to the emitting unit to provide a clock signal for the emitting unit.

Exemplarily, as shown in Fig. 3, the clock generator 11 generates an original clock signal and outputs the original clock signal to the receiving unit 14, providing the receiving unit 14 with a clock signal, and the original clock signal is output to the emitting unit 13 after being frequency divided/multiplied by the receiving unit 14.

In an embodiment, the frequency division/multiplication processing of the original clock signal by the receiving unit can be implemented by using existing frequency division circuits and frequency multiplication circuits.

Based on the clock homology design adopted by the emitting unit and the receiving unit of the LiDAR system, the LiDAR data processing device provided in an embodiment is arranged on the receiving unit side, and is used to perform phase decomposition processing on the LiDAR system data received by the receiving unit, thereby eliminating the problem of inaccurate measurement results caused by the clock signal asynchronism between the emitting unit and the receiving unit.

Refer to Fig. 4, which is a schematic diagram of the structure of the LiDAR data processing device provided in an embodiment. As shown in Fig. 4, the LiDAR data processing device 40 include an input selection module 41, a time digital conversion module 42, an extraction module 43 and a phase decomposition module 44.

The input selection module 41 is used to select an input channel, and the input channel includes an echo signal input channel and a start signal input channel.

The time digital conversion module 42 is connected to the input selection module 41, and is used to respectively time the echo signal and the start signal for initiating the emission signal input by the input selection module 41, to obtain a timing result.

The extraction module 43 is connected to the input selection module 41 and the time digital conversion module 42 respectively, and is used to extract the phase of the start signal to obtain a phase result.

The phase decomposition module 44 is connected to the extraction module 43, and is used to calculate the measurement result according to the timing result and the phase result.

In an application, the echo signal input channel is used to receive an echo signal (Wave signal), and the start signal input channel is used to input a start signal for initiating an emission signal (Start signal).

The echo signal is the echo signal received by the receiving unit after the detection signal emitted by the emitting unit reaches the target object and is reflected by the target object. In an embodiment, it can be the echo data received by the receiving sensor in the receiving unit. The start signal is the start signal corresponding to the control unit of the emitting unit to perform the emission action, at the start time of the start signal, the control unit of the emitting unit starts to control an emitter to perform the action of emitting the detection signal.

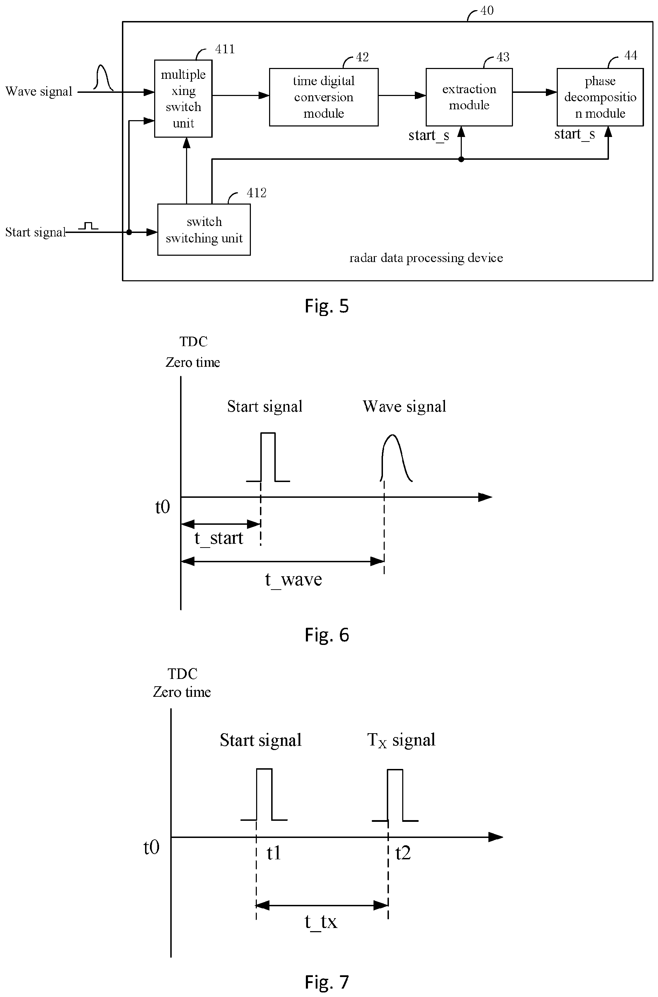

In some embodiments, as shown in Fig. 5, the input selection module 41 may include a multiplexing switch unit 411 and a switch switching unit 412.

The multiplexing switch unit 411 is respectively connected to the echo signal input channel and the start signal input channel, and is used to select a first signal path or a second signal path.

The switch switching unit 412 is connected to the multiplexing switch unit 411 and is used for outputting a switching signal to the multiplexing switch unit 411, when the receiving unit receives the echo signal, so that the multiplexing switch unit 411 selects the second signal path.

The first signal path is a connection path between the echo signal input channel and the time digital conversion module 42, that is, when the multiplexing switch unit 411 selects the first signal path, the echo signal can be input into the time digital conversion module 42. The second signal path is a connection path between the start signal input channel and the time digital conversion module 42, that is, when the multiplexing switch unit 411 selects the second signal path, the start signal can be input into the time digital conversion module 42.

In some embodiments, the multiplexing switch unit 411 may include a multiplexing switch, and the on-off control of the first signal path and the second signal path is achieved through the multiplexing switch.

The multiplexing switch unit 411 may also use other electrical devices capable of realizing on-off control of the path.

In an embodiment, when the receiving unit receives a start signal (S tart signal), the multiplexing switch unit selects the first signal path, that is, the start signal can be input from the start signal input channel to the above-mentioned time digital conversion module 42 for processing, so that the above-mentioned clock data conversion module 42 can time the above-mentioned start signal (S tart signal). When the receiving unit receives an echo signal, the switch switching unit 412 will output a switching signal to the multiplexing switch unit 411, so that the multiplexing switch unit 411 connects the connection path between the echo signal input channel and the time digital conversion module 42, so that the clock data conversion module 42 can time the echo signal, so that a timing result can be obtained.

In some embodiments, the switch unit 412 is configured to output a valid signal flag start_s to the extraction module 43 and the phase decomposition module 44.

In an embodiment, the valid signal flag is used to indicate that the signal being processed by the time digital conversion module 42 is an echo signal, and the corresponding timing result is the timing result of the echo signal (the second signal path is selected). The extraction module 43 and the phase decomposition module 44 can determine whether the currently input processed signal is an echo signal (Wave signal) or a start signal (Start signal) based on whether the valid signal flag start_s is received. That is, in the case of receiving the valid signal flag start_s, the extraction module 43 and the phase decomposition module 44 can determine that the currently input processed signal is an echo signal, and in the case of not receiving the valid signal flag start_s, the extraction module 43 and the phase decomposition module 44 can determine that the currently input processed signal is a start signal.

In an embodiment, the switch switching unit can output a valid signal flag start_s when controlling the multiplexing switch unit to connect to the first signal path. In this case, the valid signal flag is used to indicate that the signal being processed by the time digital conversion module 42 is a start signal, and the corresponding timing result is the timing result of the start signal. In an embodiment, the phase decomposition (dephasing) module 44 will perform dephasing processing when it receives the valid signal flag. By setting the valid signal flag, the extraction module 43 and the dephasing module 44 can determine which signal the currently received timing result corresponds to, so that the extraction module 43 and the phase decomposition module 44 can more accurately process the echo signal that needs dephasing processing.

In some embodiments, the clock data conversion module 42 may include a timing chip, such as a TDC (Time To Digital Convertor) timing chip. By timing the start signal and the echo signal respectively through the TDC timing chip, the time delay t_wave between the echo signal (Wave signal) and the zero time of the TDC timing chip and the time delay t_start between the start enable signal (Start signal) and the zero time of the TDC timing chip can be obtained.

Refer to Figure 6, which is a phase timing diagram obtained by the receiving unit. As shown in Figure 6, t_start is the time delay between the start signal (Start signal) and the zero time (t0) (that is, the phase value of the start signal), and t_wave is the time delay between the echo signal (Wave signal) and the zero time (t0).

As can be seen from Figure 6, the measurement result t_wave_result can be determined according to the following formula:

$$t\_wave\_result = t\_wave - t\_start \qquad\qquad \text{formula (1)}$$

In an embodiment, the phase value of the start signal may be a phase result obtained after the extraction module 43 extracts the phase of the start signal.

In some embodiments, in a part of the LiDAR system, there is a certain delay when the emitting unit performs the action of emitting the detection signal. For the LiDAR system, the delay ( t_tx ) from the start time of the Start signal to the emission of the detection signal ( TX signal ) can be determined according to the device parameters, working parameters and other data of the LiDAR system.

Exemplarily, as shown in Fig. 7, the Start signal is a start signal sent by the emitting unit to the receiving unit, the TX signal is a detection signal emitted by the emitting unit, and the time delay t_tx between the Start signal and the TX signal is the time interval from the start time t1 of the Start signal to the start time t2 of the TX signal.

In an embodiment, for the above LiDAR system, the final measurement result can be determined according to the following formula:

$$t\_result = t\_wave\_result - t\_tx = t\_wave - t\_start - t\_tx \qquad\qquad \text{formula (2)}$$

When the above-mentioned phase decomposition module 44 receives the valid signal mark, it can perform phase decomposition processing according to the formula (1) and formula (2) (that is, calculate the measurement result by the above-mentioned formula (1) and formula (2)), thereby eliminating the time delay of the clock signal of the LiDAR system transceiver unit.

Radar processing device provided in an embodiment can perform timing according to the start signal and the echo signal respectively to obtain a time measurement result, and then perform phase decomposition processing according to the extracted phase result of the start signal and the time measurement result, thereby obtaining a measurement result with the time delay eliminated, effectively improving the accuracy of the measurement result of the LiDAR system and improving the measurement accuracy of the LiDAR system.

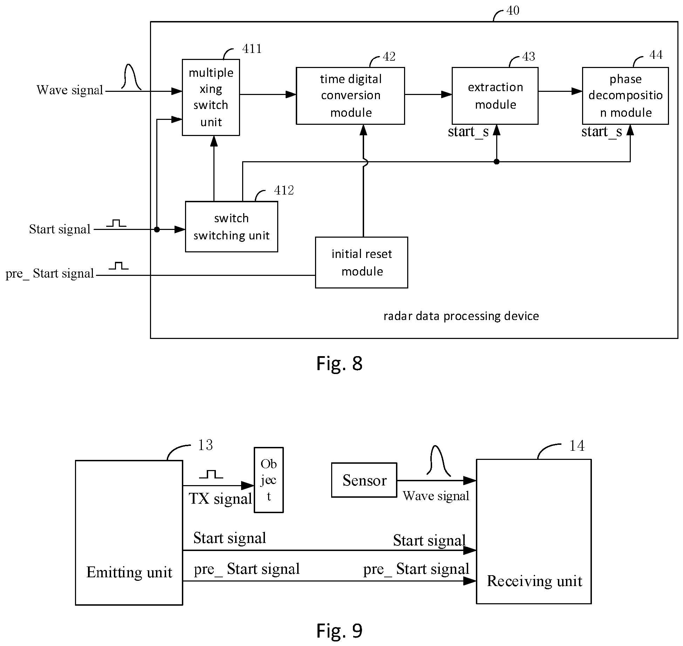

In some embodiments, as shown in Fig. 8, the LiDAR data processing device 40 may further include an initial reset module 45. The initial reset module 45 is connected to the time digital conversion module 42, and is configured to output a zeroing control instruction to the time digital conversion module 42 upon receiving a start signal, so as to reset the zero time of the time digital conversion module 42.

In an embodiment, as shown in Fig. 9, the start signal pre_Start signal may be sent by an emitting unit.

Controlling the zero time reset of the time digital conversion module 42 by the start signal is helpful to adjust the timing process of the above LiDAR data processing device according to the actual situation of the emitting end, which can improve the accuracy and practicality of the timing.

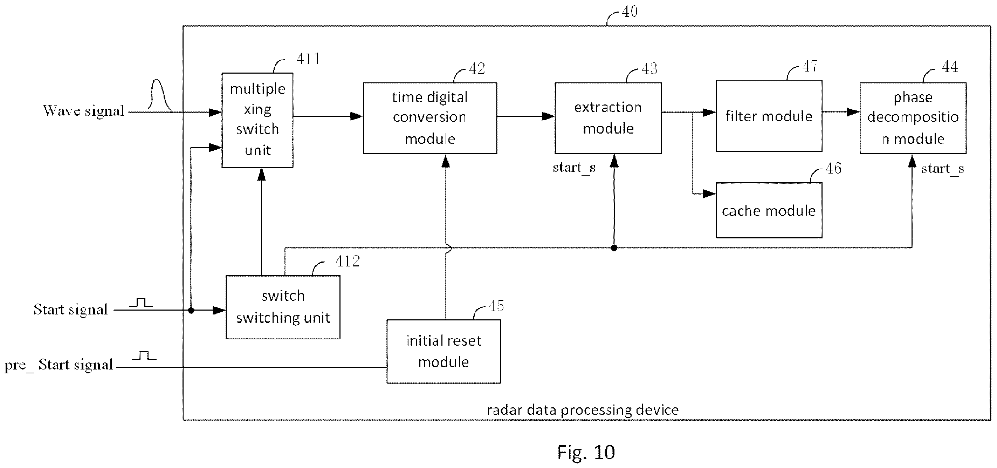

In some embodiments, as shown in Fig. 10, the LiDAR system data device 40 may further include a cache module 46 and a filter module 47.

The cache module 46 is connected to the extraction module 43 and is used to cache the phase results extracted by the extraction module 43.

The filter module 47 is connected to the cache module 46 and is used for filtering the phase results cached in the cache module 46.

In an embodiment, the cache module 46 can cache the phase results of multiple start signals, and the filter module 47 can include a low-pass filter, which filters the phase results of the multiple start signals through the low-pass filter, to eliminate abnormal values of the phase results and improve the accuracy of the phase results.

The filter module 47 may adopt other filters, such as mean filtering, etc.

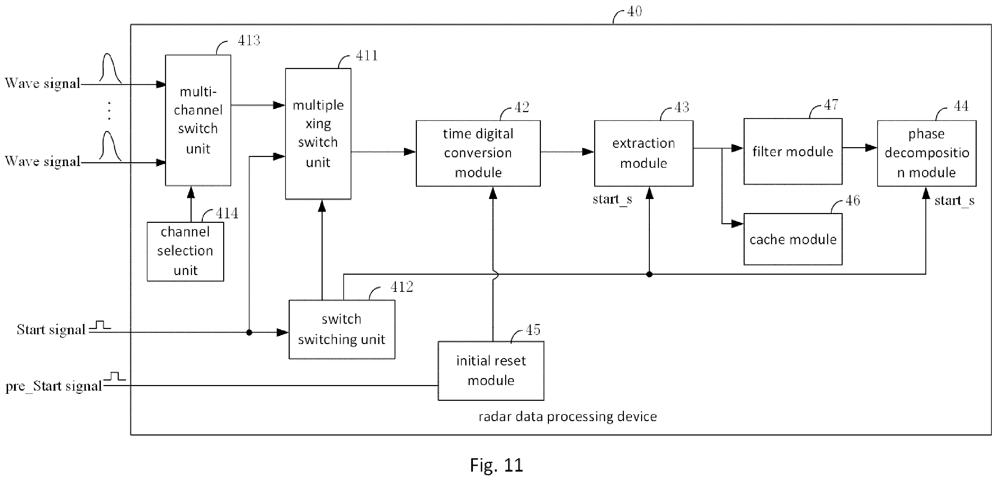

In some embodiments, the receiving unit of the LiDAR system may include multiple receiving channels. Since each receiving channel has an independent sensor to collect echo signals. Based on this, as shown in Fig. 11, in one embodiment, a multi-channel switch unit 413 and a channel selection unit 414 are also included. The multi-channel switch unit 413 is respectively connected to the multiple receiving channels, and the output end of the multi-channel switch unit 413 is connected to the multiplexing switch unit 411.

The channel selection unit 414 is connected to the multi-channel switch unit 413 and is used to output a channel selection signal.

The multi-channel switch unit 413 selects the connection path of the corresponding receiving channel according to the input channel selection signal.

The channel selection signal can be output by a control chip or other modules of the LiDAR system according to the actual working conditions of the LiDAR system.

In an embodiment, the echo signals input by all receiving channels are dephased using the same time digital conversion module 42, extraction module 43 and phase decomposition module 44 (which may also include an initial reset module 45, a cache module 46 and a filter module 47). Dephase processing of multiple receiving channels can be achieved by selecting the corresponding receiving channels through the multi-channel switch unit 413.

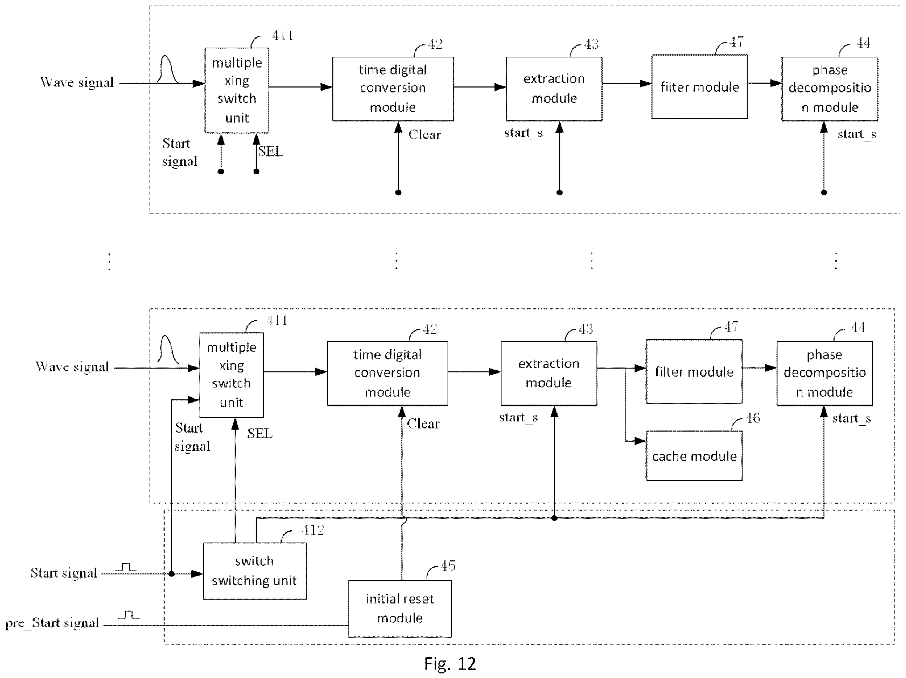

As shown in Fig. 12, in some embodiments, each receiving channel is provided with a multiplexing switch unit 411, a time digital conversion module 42, an extraction module 43, and a phase decomposition module 44 (which may also include a filter module 47). In addition, multiple receiving channels are connected to a switch switching unit 412, and the switch switching unit 412 is connected to a start signal. The switch unit 412 is used to control a gating state of the multiplexing switch unit 411 in the multiple receiving channels, and further control a signal type of the time digital conversion module 42 connected to each receiving channel (i.e., whether the time digital conversion module 42 connected to each receiving channel is an echo signal or a start signal).

In an embodiment, when the receiving sensor of one of the multiple receiving channels starts to collect echo signals, the switch switching unit 412 can select the connection path corresponding to the echo signal according to the multiplexing switch unit 411 that controls the receiving channel, and transmit the echo signal collected by the receiving sensor of the receiving channel to the time digital conversion module 42 of the receiving channel and other subsequent modules for phase de-phase processing.

In an embodiment, the multiple receiving channels are all connected to the initial reset module 45, which is used to output a zeroing control instruction to the time digital conversion module 42 in each receiving channel, so that the zero time of the TDC timing chip in each receiving channel is reset.

In an embodiment, the switch switching unit 412 is also used to output a valid signal flag to the extraction module 43 and the phase decomposition module 44 in each receiving channel.

By using the same start signal, respectively setting the multiplexing switch unit 411, the time digital conversion module 42, the extraction module 43 and the phase decomposition module 44 in the LiDAR data processing device in each receiving channel can also realize the dephasing processing of multiple receiving channels.

An embodiment of the present application provides a LiDAR system.

The LiDAR system comprises an emitting unit and a receiving unit. The emitting unit and the receiving unit adopt a homologous clock design. The receiving unit is provided with a LiDAR data processing device shown in any of the above embodiments.

For the convenience and simplicity of description, only the division of the above-mentioned functional units and modules is used as an example. In actual applications, the above-mentioned function allocation can be completed by different functional units and modules as needed, that is, the internal structure of the terminal device can be divided into different functional units or modules to complete all or part of the functions described above. The functional units and modules in the embodiment can be integrated into a processing unit, or each unit can exist physically separately, or two or more units can be integrated into one unit. The above-mentioned integrated unit can be implemented in the form of hardware or in the form of software functional units. In addition, the names of the functional units and modules are only for the convenience of distinguishing each other. The working process of the units and modules in the above-mentioned system can refer to the corresponding process in the aforementioned method embodiment, which will not be repeated here.

The units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution.

**Claims**

1. A LiDAR data processing device, applicable to a receiving unit of a LiDAR system, comprising:

    an input selection module, configured to select an input channel, wherein the input channel includes an echo signal input channel and a start signal input channel, the echo signal input channel is used to receive an echo signal, and the start signal input channel is used to input a start signal for initiating an emission signal, and the start signal is sent by an emitting unit;
    a time digital conversion module, connected to the input selection module, and configured to time the echo signal or the start signal to obtain a timing result;
    an extraction module, connected to the input selection module and the time digital conversion module respectively, and configured to perform phase extraction on the start signal to obtain a phase result; and
    a phase decomposition module, connected to the extraction module, and configured to calculate a measurement result based on the timing result and the phase result,
    wherein the receiving unit and the emitting unit adopt a homologous clock design.

2. The LiDAR data processing device according to claim 1, wherein the input selection module comprises:

    a multiplexing switch unit, connected to the echo signal input channel and the start signal input channel respectively, and configured to select a first signal path or a second signal path, wherein the first signal path is a connection path between the echo signal input channel and the time digital conversion module, and the second signal path is a connection path between the start signal input channel and the time digital conversion module; and
    a switch switching unit, connected to the multiplexing switch unit and configured to output a switching signal to the multiplexing switch unit when the receiving unit receives the echo signal, so that the multiplexing switch unit selects the second signal path.

3. The LiDAR data processing device according to claim 2, wherein the switch switching unit is connected to the extraction module and the phase decomposition module respectively;
    the switch switching unit is further configured to output a valid signal flag to the extraction module and the phase decomposition module.

4. The LiDAR data processing device according to claim 3, wherein the valid signal flag is used to indicate that a signal being processed by the time digital conversion module is the echo signal;
    the phase decomposition module is used to perform dephasing process according to the timing result and the phase result when the valid signal flag is received.

5. The LiDAR data processing device according to any one of claims 1 to 4, wherein the LiDAR data processing device further comprises:

an initial reset module, connected to the time digital conversion module, and configured to output a zeroing control instruction to the time digital conversion module when receiving a start signal, so as to reset the zero time of the time digital conversion module.

6. The LiDAR data processing device according to any one of claims 1 to 5, wherein the LiDAR data processing device further comprises:

a cache module, connected to the extraction module, and configured to cache the phase results extracted by the extraction module; and
a filtering module, connected to the cache module, and configured to filter the phase results cached in the cache module.

7. The LiDAR data processing device according to claim 1, wherein the receiving unit comprises a plurality of receiving channels, and the LiDAR data processing device further comprises:

a multi-channel switch unit, connected to the plurality of receiving channels respectively, and configured to select a connection path of the corresponding receiving channel according to a channel selection signal; and
a channel selection unit, connected to the multi-channel switch unit, and configured to output a channel selection signal.

8. The LiDAR data processing device according to claim 1, wherein the receiving unit comprises a plurality of receiving channels, each receiving channel is provided with a multiplexing switch unit, a time digital conversion module, an extraction module and a phase decomposition module;

the multiple receiving channels are all connected to the switch switching unit;
the switch switching unit is configured to access the start signal and control a gating state of the multiplexing switch units in the multiple receiving channels.

9. A LiDAR system, wherein the LiDAR system comprises an emitting unit and a receiving unit;

the emitting unit and the receiving unit adopt a homologous clock design;
the receiving unit comprises the LiDAR data processing device according to any one of claims 1 to 8.

10. The LiDAR system according to claim 9, wherein the emitting unit and the receiving unit are respectively connected to an external clock generating circuit;

the external clock generating circuit includes a clock generator and a power division circuit;
the clock generator is configured to generate and output an original clock signal;
the power division circuit is configured to split the original clock signal to obtain a first clock signal and a second clock signal, and output the first clock signal to the emitting unit and output the second clock signal to the receiving unit.

11. The LiDAR system according to claim 9, wherein the emitting unit is connected to an external clock generator;

the external clock generator is configured to generate and output an original clock signal to the emitting unit;
the emitting unit is configured to perform frequency division processing or frequency multiplication processing on the original clock signal, and output the processed clock signal to the receiving unit.

12. The LiDAR system according to claim 9, wherein the receiving unit is connected to an external clock generator;

the external clock generator is used to generate and output an original clock signal to the receiving unit;
the receiving unit is used to perform frequency division processing or frequency multiplication processing on the original clock signal, and output the processed clock signal to the emitting unit.

13

PLL

12

14

PLL

division circuit

11

Emitting Unit

clock generator

Receiving unit

Fig. 1

13

14

PLL

PLL

11

emitting unit

clock generator

receiving unit

Fig. 2

13

14

PLL

PLL

11

emitting unit

clock generator

receiving unit

Fig. 3

40

41

42

43

44

- Wave signal

input selection module

time digital conversion module

extraction module

phase decomposition module

- Start signal

radar data processing device

Fig. 4

Fig. 5

Fig. 6

Fig. 7

40

411

Wave signal

| multiple xing switch unit | → | time digital conversion module | → | extraction module | → | phase decompositio n module |

42

43

44

start_s

start_s

412

Start signal

switch switching unit

initial reset module

pre_ Start signal

radar data processing device

Fig. 8

13

14

TX signal

Ob jec t

Sensor

Wave signal

Start signal

Start signal

pre_ Start signal

pre_ Start signal

Emitting unit

Receiving unit

Fig. 9

40 — radar data processing device

- 44 phase decomposition module
- 47 filter module
- 46 cache module
- 43 extraction module
- 42 time digital conversion module
- 45 initial reset module
- 411 multiple xing switch unit
- 412 switch switching unit

start_s

Wave signal

Start signal

pre_Start signal

Fig. 10

Fig. 11

radar data processing device

Fig. 12

Europäisches
Patentamt
European
Patent Office
Office européen
des brevets

# EUROPEAN SEARCH REPORT

**Application Number**

EP 24 20 3618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/259627 A1 (SHINOZUKA YASUHIRO [JP] ET AL) 13 September 2018 (2018-09-13) * the whole document * | 1-12 | INV. G01S7/481 G01S7/4865 G01S7/487 |
| A | JP 2023 088578 A (TOKAI RIKA CO LTD) 27 June 2023 (2023-06-27) * paragraphs [0008] - [0019]; figure 1 * | 1-12 | G01S17/14 G01S17/931 |
| A | US 2022/146647 A1 (SAKAZUME SHUNSUKE [JP]) 12 May 2022 (2022-05-12) * paragraphs [0079] - [0096], [0114] - [0120]; figures 2,10 * | 1-12 | |

**TECHNICAL FIELDS SEARCHED (IPC)**

G01S

The present search report has been drawn up for all claims

| Place of search | Date of completion of the search | Examiner |
|---|---|---|
| Munich | 12 February 2025 | Reeck, Guido |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 3618

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| US 2018259627 | A1 | 13-09-2018 | EP | 3373031 A1 | 12-09-2018 |
| | | | JP | 6933473 B2 | 08-09-2021 |
| | | | JP | 2018151197 A | 27-09-2018 |
| | | | US | 2018259627 A1 | 13-09-2018 |
| JP 2023088578 | A | 27-06-2023 | NONE | | |
| US 2022146647 | A1 | 12-05-2022 | JP | 2020159921 A | 01-10-2020 |
| | | | US | 2022146647 A1 | 12-05-2022 |
| | | | WO | 2020195931 A1 | 01-10-2020 |

EPO FORM P0459

For more details about this annex : see Official Journal of the European Patent Office, No. 12/82